(19) Europäisches Patentamt
European Patent Office
Office européen des brevets

(11) **EP 3 632 186 B1**

(12) # EUROPEAN PATENT SPECIFICATION

(45) Date of publication and mention
of the grant of the patent:
**11.11.2020 Bulletin 2020/46**

(51) Int Cl.:
**H05B 47/10** (2020.01) **H02J 3/18** (2006.01)

(21) Application number: **18723024.8**

(22) Date of filing: **16.05.2018**

(86) International application number:
**PCT/EP2018/062699**

(87) International publication number:
**WO 2018/219646 (06.12.2018 Gazette 2018/49)**

(54) **LIGHTING NETWORK FOR CONTROLLING REACTIVE POWER DEMAND**

BELEUCHTUNGSNETZ ZUR REGELUNG VON REAKTIVEM LEISTUNGSBEDARF

RÉSEAU D'ÉCLAIRAGE POUR RÉGULER LA DEMANDE EN PUISSANCE RÉACTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2017 IN 201741018755
02.08.2017 EP 17184415**

(43) Date of publication of application:
**08.04.2020 Bulletin 2020/15**

(73) Proprietor: **Signify Holding B.V.
5656 AE Eindhoven (NL)**

(72) Inventors:
• **POOJARY, Vasu
5656 AE Eindhoven (NL)**

• **UDUPA, Narendranath
5656 AE Eindhoven (NL)**
• **CHOLACHAGUDDA, Mahadev
5656 AE Eindhoven (NL)**
• **PULLELA, Venkata, Sriram
5656 AE Eindhoven (NL)**
• **SHIVANNA, Vikram
5656 AE Eindhoven (NL)**

(74) Representative: **Verweij, Petronella Daniëlle
Signify Netherlands B.V.
Intellectual Property
High Tech Campus 7
5656 AE Eindhoven (NL)**

(56) References cited:
**US-A1- 2015 130 363 US-B1- 6 462 519**

**Description**

FIELD OF THE INVENTION

This invention relates to the field of lighting networks, and in particular to lighting networks that receive an alternating current, AC, supply.

BACKGROUND OF THE INVENTION

Electrical power distribution networks face an issue of poor mains power supply quality due to voltage and frequency fluctuations, as well as variations in reactive power and higher harmonic contents in power lines. Balancing at least reactive electrical power between an electrical mains supply and a connected load (i.e. balancing supply and demand) is often used to improve mains power supply quality.

Typically, in order to balance supply and demand of electrical power to a load, generation of electrical power is modified to follow load demand. However, as there may be sudden changes in a load or electrical generation capabilities, such as generator shutdown, relying only on modifying this generation is not always efficient and reliable.

At present, to partially overcome this issue, demand side management (DSM) may be used, in which the end user will reduce/shut down at least some of a load at peak times (Peak Load Management) or at the request of a utility company (Demand Response).

GB2411971A describes a power factor adjustment device which may be applied to a streetlight. The power factor adjustment device detects an input current and voltage of the streetlight so as to meter the power factor of the streetlight. Capacitors of a circuit of the streetlight may be switched between the supply and the load by the power factor adjustment unit so as to assist in balancing the supply and demand of electrical power to the load.

US20150130363A1 discloses a LED driving device with a plurality of capacitors at the input and parallel with the rectifier. The capacitors are selectively switched on based on an input voltage or an output voltage of a converter in the LED driving device.

SUMMARY OF THE INVENTION

The drawback in the prior art is that it is limited in a single luminaire, such as a single streetlight, and it can only compensate the power factor in that specific luminaire. In a lighting network comprising a plurality of luminaires, it is not economical to deploy a power factor adjustment device in each of the luminaires. Furthermore, in a larger electrical network comprising a lighting network and other appliances, if using devices according to the prior art, the lighting network can only compensate for itself. Such a network is unable to compensate a power factor decrease caused by the other appliances.

US7531922B1 discloses a method and apparatus for using lighting to perform facility-wide power factor correction. The solution is that electronic lighting ballast intentional presents a non-unity power factor load. The ballast is programmed to create either a power factor or a harmonic distortion that purposely counters a different power factor or different harmonic distortion created elsewhere in the building and/or to create a reduced harmonic distortion or a unity power factor. The drawback of this prior art is that it is relatively complex to modify the ballast's behavior since the ballast is typically an active circuit and the control loop of the ballast needs to be tuned to achieve function which is not easy.

A basic idea of the embodiments of the invention is implementing the power factor compensation in a distributed manner, such that one luminaire can compensate for another appliance's power factor deterioration. Both the luminaire and the another appliance are connected to the same AC supply, although they may be at the same or different locations in the hierarchal electrical distribution network. At the main AC input of the hierarchal distribution network, the power factor is compensated, and can reduce the requirement to the utility provider. The luminaire is capable of receiving a command from a remote control, which command is associated with the another appliance's power factor deterioration.

The invention is defined by the claims.

According to examples in accordance with an aspect of the invention, there is provided a lighting network comprising: a plurality of luminaires adapted to connect to an alternating current, AC, supply, wherein each luminaire comprises a light emitting arrangement and a reactive component of a first reactive type selectively couplable to the AC supply; and a controller adapted to: receive a power factor signal, indicative of a power factor of the AC supply, and influenced by an appliance with a reactive load of a second reactive type connected to the AC supply, wherein the appliance is different to any one of the luminaires; and control the coupling of the reactive component of each luminaire to the AC supply based on the received power factor signal of the appliance so as to adjust the power factor of the AC supply.

The lighting network enables luminaires in a lighting network to participate in grid power quality correction. In particular, luminaires are provided with a reactive component (e.g. comprising a capacitor, inductor or supercapacitor), which may be controllably coupled to a AC power supply, such as a mains supply. In some examples, the reactive component may shunt at least some of the AC power supply (e.g. to a ground or reference voltage).

This enables the lighting network to control the power factor and voltage balance of an AC supply. Thus, the lighting network may help compensate a poor quality AC supply by improving the power factor of the AC supply and/or reducing a voltage imbalance. Such a lighting network may, in particular, help grid stabilization when the lighting network is installed in a building participating in active/reactive compensation.

A difference from the prior art US7531922B1 is that it does not program or tune a driver or a ballast in the luminaire, but only needs coupling or decoupling the reactive component which is separate from the lighting driver. The application is quite convenient.

In order to control the power factor of the AC supply, the controller controls the coupling of two or more reactive components of a first reactive type, of a respective two or more luminaires, based on a received power factor signal. Thus, there is provided a system level implementation in which reactive components of luminaires are managed so as to enable control over the power factor of the AC supply.

This allows for more precise control over how/where the power factor of the AC supply is compensated or otherwise adjusted. In this way, compensation of an AC supply may be distributed throughout a lighting network, rather than being concentrated in a single luminaire. This may further enable improved techniques of power factor management to be implemented on a system-wide level, such as location specific management or grouping luminaires to be managed.

The received power factor signal is influenced by an appliance with a reactive load of a second reactive type (i.e. not necessarily associated with luminaires), and changes accordingly. In this way, the controlling of the reactive components of the luminaires may compensate the deviance in power factor caused by the demands of other appliances with a reactive load, such as an HVAC system, on an electrical network. As such, a power factor for an entire electrical network may be corrected or improved by a lighting network of that electrical network.

The power factor signal may be obtained from an energy meter, which may be positioned at a mains input to a building or an intermediate node between the mains input and loads drawing power from the mains input. This ensures that the lighting system assists in compensating for a poor power factor provided to a plurality of different loads (i.e. rather than just a single luminaire).

Preferably, each reactive component of the first reactive type is the same one of a capacitive component and an inductive component, and the reactive load of the second reactive type is the other of a capacitive load and an inductive load. In some other embodiments, the reactive component of each luminaire may, for example, comprise individually controllable capacitive and inductive components to provide improved control over the power factor of the AC supply.

Preferably, the first reactive type is capacitive, and the second reactive type is inductive. Many heavy loads in the electrical network are inductive, such as those with motor/compressor, for example air conditioner, refrigerator, electrical elevator. Thus this embodiment can better mitigate the influence of those heavy loads to the power factor.

The lighting network (with the luminaires) may be adapted to be connectable to a first distribution branch of the AC supply, wherein the appliance with a reactive load of a second reactive type is in the same first distribution branch, and the lighting network further comprises a power factor detector adapted to detect the power factor of the AC supply at an input node of the lighting network, and the controller is adapted to receive the power factor signal from the power factor detector. Here the lighting network may be mixed/interleaved with appliances in the same distribution branch, so that power factor compensation may be done close to an appliance affecting the power factor of the AC supply.

In other embodiments, the lighting network is connectable to a first distribution branch of the AC supply, wherein the appliance with a reactive load of the second reactive type is in a second, different distribution branch of the AC supply, wherein the controller is adapted to receive the power factor signal from a remote power factor detector associated with the appliance with a reactive load of the second reactive type in the second distribution branch. In the electrical distribution network, different kind of devices are sometimes put in different branches for an ease of controlling/monitoring. However, the luminaire in one branch can still be used to compensate another appliance in another branch, and the power factor at the main input, supplied by the utility provider, is still improved.

There may therefore be provided a power factor detector adapted to detect the power factor of the AC supply at a variety of locations of an electrical network. In some embodiments, the power factor detector monitors a mains supply to a particular electrical network (e.g. associated with an entire building). In other embodiments, the power factor detector monitors a supply provided at a node associated with one or more loads drawing power from the mains supply. The power factor detector may comprise an energy meter or an energy sub-meter.

In particular, a power factor detector may detect a power factor in a distribution branch of the plurality of luminaires or in a distribution branch of the appliance with a reactive load of the second reactive type. The detected power factor may therefore either be local to the luminaires/other appliance or more distant from the luminaires/other appliance.

Optionally, the power factor detector detects a power factor at an intermediate node to which a combination of the luminaires and the appliance with a reactive load of a second reactive type is connected. However, the power factor detector may instead detect a power factor at an intermediate node to which only the appliance with a reactive load of the second reactive type is connected.

Optionally, the plurality of luminaires comprises at least two sets of two or more luminaires; and the controller is adapted to: obtain a respective power factor signal associated with an AC supply provided to each set of two or more luminaires; and control the coupling of the reactive component of each luminaire, in the plurality of luminaires, based on the power factor signal associated with the set of that luminaire.

There may be provided groups/sets of two or more luminaires. Each group of luminaires may be associated with a respective node of the AC supply, representing a distribution branch of that AC supply. A node may be represented by an energy meter or sub-meter with a communication port, which monitors a power supply to different appliances associated with respective groups/sets of luminaires. The controller may be adapted to obtain respective power factor signals for these different appliances by reading the meter through communication port.

In this way, adjustment of the power factor of the AC supply may be performed by groups/sets of luminaires separately. In particular, groups/sets of luminaires may be adapted to adjust the power factor separately based on a power factor signal associated with that set. This provides extra flexibility in controlling the luminaires individually or in groups, without having to control all luminaires in the same manner.

In some embodiments, each luminaire in a set of two or more luminaires is connected to a same node, and wherein each set of two or more luminaires is connected to a different node or distribution branch.

In this way, the luminaires are placed in different locations/levels/branches in the electrical distribution network. This allows selection of an appropriate group of luminaires in different locations/levels/branches so as to provide better compensation.

Optionally, at least one set of two or more luminaires is associated with a respective set of one or more appliances with a reactive load of a second reactive type, and the controller is adapted to control the coupling of the reactive component of the at least one set of two or more luminaires according to power factor of the respective appliances with a reactive load of a second reactive type.

Thus, each set of luminaires may be responsible for adjusting the power factor of an AC supply provided to a particular or specific appliance with a reactive load of the second reactive type. This may improve the power factor adjustment/correction, as more precise control over power factor adjustment may be realized by providing dedicated luminaires for particular appliances.

The controller may be adapted to control the coupling of the reactive component of each luminaire further based on a proximity relationship, between the luminaire and an appliance with a reactive load of the second reactive type, in a distribution hierarchy of the AC supply.

The controller may therefore be capable of controlling the reactive components of luminaires based on a positional relationship between the luminaires and the appliance with a reactive load(s) of the second reactive type.

This may allow the reactive components of luminaires proximate or near an appliance with a reactive load (of the second reactive type) to be controlled. It has been identified that providing compensating reactive components (of the first reactive type) close to the appliance with a reactive load (of the second reactive type) improves compensation of the power factor of the AC supply, e.g. when compared to compensating appliance with a reactive load positioned more distant.

The positional relationship may represent a physical proximity, indicating how close the luminaire itself is to an appliance with a reactive load of the second reactive type, or a network proximity, indicating how close connections of the luminaire and the appliance with a reactive load (of the second reactive type) to a power supply are to one another. Thus, the positional relationship may be one or more of the following: length of wire between, distance in meters, number of components between, number of other loads/luminaires between, number of meters/nodes between, hierarchical distance and so on.

An advantage of selecting a nearby luminaire to perform power factor compensation/adjustment is that of reducing the effective length over which current harmonics flow in a wire. For example, if the compensation is performed by a more distant luminaire then current harmonics have to be transmitted up to a more distant node for the luminaire.

There is also proposed the concept of an electrical network comprising a lighting network as previously described; and comprising at least one appliance with a reactive load of the second reactive type connected to the AC supply.

The electrical network may be associated with a building, location or other infrastructure. It will be apparent that a lighting network according to an embodiment may improve a power efficiency of an electrical network by compensating for the changes in reactive power caused by the at least one appliance with a reactive load of the second reactive type in the electrical network.

Each at least one appliance with a reactive load of the second reactive type may comprise one or more inductive loads, wherein each appliance optionally comprises a Heating, Ventilation and Air Conditioning, HVAC, unit; an elevator; a fan; a printer; a scanner; and/or a fax machine. The reactive load of the second reactive type in those appliance normally comprises inductive coils, a compressor, and/or a motor.

In some examples, the lighting network is adapted to be connected to a first distribution branch of the AC supply, wherein the at least one appliance with a reactive load of a second reactive type is also connected to the same first distribution branch, wherein the lighting network further comprises a power factor detector adapted to detect the power factor of the AC supply at an input node of the lighting network, and the controller is adapted to receive the power factor signal from the power factor detector.

In other examples, the lighting network is adapted to be connected to a first distribution branch of the AC supply, wherein the at least one appliance with a reactive load of the second reactive type are in a second, different distribution branch of the AC supply, wherein the electrical network further comprises a remote power factor detector adapted to detect the power factor of the AC supply in the second distribution branch and the controller is adapted to receive the power factor signal from the remote power factor detector.

Optionally, the controller is adapted to select a subset of the plurality of luminaires based on a proximity relationship between the subset and the at least one appliance with a reactive load of the second reactive type in the AC distribution hierarchy.

According to examples in accordance with another aspect of the invention, there is provided a method of controlling a lighting network, having two or more luminaries adapted to connect to an alternating current, AC, supply, wherein each luminaire comprises a light emitting arrangement and a reactive component of a first reactive type selectively couplable to the AC supply, the method comprising: receiving a power factor signal, indicative of a power factor of the AC supply, and influenced by at least an appliance with a reactive load of a second reactive type connected to the AC supply, wherein said appliance is different to any one of the luminaire; and controlling the coupling of the reactive component of each luminaire to the AC supply based on the received power factor signal so as to adjust the power factor of the AC supply.

The method may further comprise detecting the power factor of the AC supply at a node of the lighting network.

The plurality of luminaires may comprise at least two sets of two or more luminaires, and the method optionally comprises: obtaining a respective power factor signal associated with an AC supply provided to each set of two or more luminaires; controlling the coupling of the reactive component of each luminaire, in the plurality of luminaires, based on the power factor signal associated with the set of that luminaire.

Optionally, the method further comprises controlling the coupling of the reactive component of each luminaire further based on a positional relationship between the luminaire and an appliance with a reactive load of the second reactive type.

There may also be provided a computer program product comprising computer program code means adapted to implement the method described above when said program is run on a computer.

These and other aspects of the invention will be apparent from and elucidated with reference to the embodiment(s) described hereinafter.

## BRIEF DESCRIPTION OF THE DRAWINGS

Examples of the invention will now be described in detail with reference to the accompanying drawings, in which:

Fig. 1 shows a lighting network according to a first embodiment in an electrical network;
Fig. 2 illustrates a luminaire for a lighting network according to the first embodiment;
Fig. 3 illustrates a lighting network according to an embodiment in a more complex electrical network;
Fig. 4 illustrates a lighting network according to an embodiment in another electrical network;
Figs. 5 and 6 illustrate power factor triangles for a lighting load, other loads and a total load of an electrical circuit, before and after power factor compensation; and
Fig. 7 is a flowchart illustrating a method according to an embodiment.

## DETAILED DESCRIPTION OF THE EMBODIMENTS

The invention provides a lighting network for altering a power factor of an alternating current, AC, supply. The lighting network comprises luminaires having reactive components which are controllably coupled, by a controller, to the AC supply so as to adjust the power factor of the AC supply. The controller controls the coupling of the luminaires based on a power factor signal indicative of a power factor of the AC supply, which is influenced by an appliance with a reactive load of a second reactive type, which appliance is different to any one of the luminaires.

According to a concept of the invention, there is proposed a lighting network having a controller and a plurality of luminaires. Each luminaire comprises a reactive component or load selectively couplable to an AC supply, wherein the coupling of the reactive component is controlled by the controller. The controller may thereby adjust a power factor of the AC supply (which may be affected by other appliance with a reactive load) by controlling a coupling of the reactive components of the luminaire to the AC supply.

Embodiments are at least partly based on the realization that luminaires may be provided with reactive components controllable by a central controller. This enables a central controller to control the operation of a plurality of luminaires based on a determined power factor. This allows for improved and more precise control over the power factor of the AC supply.

Illustrative embodiments may, for example, be employed in electrical networks for buildings or other infrastructure, which commonly have appliances with a reactive load (such as HVAC systems) connected to a mains supply.

The terms 'reactive component' and 'reactive load' refer to any impedance arrangement which alters a phase difference between a current and voltage in a circuit containing such an impedance arrangement. Examples of reactive component/loads include any capacitive or inductive components/load, such as capacitors, inductors, motors, HVAC systems and so on. Typically, as a demand by a reactive load increases, so an induced phase difference between the current and voltage both across the load and in the input AC mains increases.

Enabling control over the power factor of an AC supply of an electrical network may similarly enable control over the voltage balance of the AC supply.

The term 'power factor' is commonly understood to be the ratio between the real power (provided to a load by an AC supply) and an apparent power in the circuit powered by the AC supply. That is, the power factor is a characteristic of a relationship between a power provided by an AC supply and a power transferred to a load. For the sake of clarity, the power factor has been linked to the AC supply. The term 'power factor of an AC supply' is a ratio between the real power provided by that AC supply to a load and an apparent power used by the load. Thus, the power factor of the AC supply may also be the power factor of a network or sub-network powered by the AC supply. A power factor of less than one indicates that the voltage and current waveforms are not in phase.

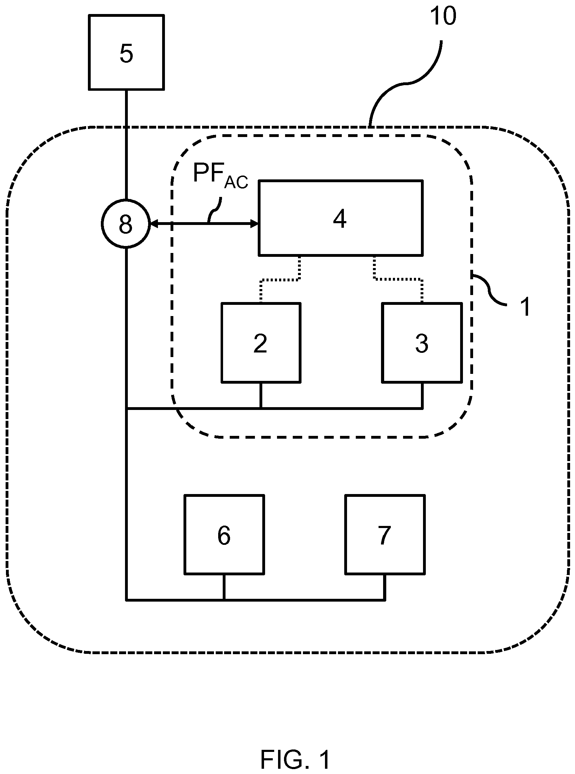

Figure 1 illustrates a lighting network 1, according to a first embodiment, in the context of a simple electrical network 10 connected to an AC supply 5. The electrical network 10 may represent an electrical network of a building or other infrastructure.

The electrical network 10 comprises the lighting network 1 formed of a plurality of luminaires 2, 3 and a controller 4. The plurality of luminaires comprises a first luminaire 2 and a second luminaire 3. Each luminaire is connected to the alternating current, AC, supply 5 for the electrical network 10. Each luminaire comprises a light emitting arrangement (not shown) and a reactive component/load of a first reactive type (not shown), the reactive load of the first reactive type being selectively or controllably couplable to the AC supply 5.

The electrical network 10 also comprises at least one other appliance 6, 7 with a reactive load of a second reactive type connected to the AC supply 5. In particular, the at least one other appliance with a reactive load of a second reactive type comprises a first appliance 6 with a reactive load and a second appliance 7 with a reactive load.

The reactive load of a second reactive type may be considered to be the combined reactive load of the appliances. Of course, the reactive load of the second reactive type may be attributable to a single or more than one appliance.

The first reactive type and the second reactive type are different. For example, the reactive component of the first reactive type preferably comprises or consists of a capacitive component, and the appliance with a reactive load of the second reactive type preferably comprises or consists of an inductive load. The appliances with a reactive load of a second reactive type may, for example, comprise inductive loads such as coils, compressors, or motors; for example, appliances may comprise Heating, Ventilation and Air Conditioning (HVAC) systems; elevators; fans; printers; scanners; fax machines and so on.

Each at least one other appliance may comprise one or more individual reactive loads (e.g. capacitors or inductors), which together form an overall reactive load of the second reactive type. Preferably, the overall reactive load of the at least one appliance is an inductive load (i.e. the combination of all the capacitors/inductors of an appliance results in an overall inductive load).

The controller 4 of the lighting network 1 is adapted to receive a power factor signal $PF_{AC}$ indicative of a power factor of the AC supply. The power factor signal may, for example, be generated by a meter 8 of the AC supply. The power factor signal is responsive to /influenced by the one or more appliances 6, 7 with a reactive load of the second reactive type. It will be clear that as demands by appliances with a reactive load change (e.g. they are switched on/off) so a power factor of the AC supply changes accordingly.

The controller 4 is adapted to control the coupling of the reactive components of the first reactive type (not shown) of the luminaires 2, 3 based on the power factor signal. By controlling the reactive components of a first reactive type, a power factor of the AC supply may be controlled centrally by a single controller 4. By basing the control of the reactive loads on a power factor signal $PF_{AC}$, a deviance in the power factor signal caused by the one or more appliances with a reactive load of the second reactive type 6, 7 may be corrected, compensated or otherwise altered.

The controller 4 may adjust the magnitude of power factor adjustment caused by the luminaires by adjusting the number of luminaires participating in power factor adjustment. For example, if only the first luminaire 2 is controlled to participate in power factor adjustment, the power factor will be adjusted to a lesser extent than if both the first 2 and second 3 luminaires are controlled to participate in power factor adjustment.

The controller 4 thereby provides a system level implementation of controlling reactive loads/components of luminaires so as to enable control over the power factor of the AC supply. In particular, a power factor of the AC supply may be adjusted according to a measured power factor of the electrical system. This allows for correction, compensation and/or improvements to the power factor of the AC supply to be made. This is markedly different from the compensation at device/appliance level of the prior art GB2411971A.

There may be any number of luminaires in the lighting system, for example, at least 100 or at least 1000. This may represent all the luminaires required for a building/location. The greater the number of luminaires, the more a power factor of the AC supply can be adjusted in terms of magnitude and/or precision.

For example, 1000 luminaires each having a reactive load or component of $1\mu F$ enable a greater adjustment to a magnitude of the power factor than 100 luminaires having a reactive load of $1\mu F$. However, 1000 luminaires each having a reactive load of $0.1\mu F$ enable a more precise adjustment to a power factor when compared to 100 luminaires each having a reactive load of $1\mu F$ (but with a same magnitude adjustment to the power factor).

The controller may, in some embodiments, be a central energy manager of an electrical network. For the purposes of this description, the term 'meter' and 'power factor detector' is considered interchangeable.

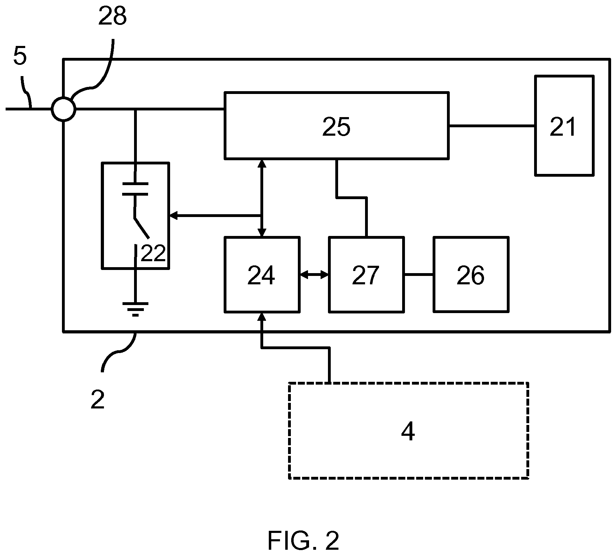

Figure 2 illustrates an embodiment of a luminaire 2 of the lighting network 1 according to the first embodiment.

The luminaire 2 comprises a light emitting arrangement 21 and a reactive component 22 of a first reactive type, selectively couplable to the AC supply 5.

The lighting arrangement 21 may comprise one or more LEDs or other light emitting elements, such as halogen bulbs. Preferably, the lighting arrangement 21 comprises an LED string of two or more LEDs.

The reactive component 22 of a first reactive type is preferably a shunt capacitor, adapted to selectively shunt the AC supply 5 through the shunt capacitor.

In a simple implementation, the reactive load 22 may comprise at least one capacitor and switch (e.g. BJT or MOSFET) connected in series between the AC supply 5 and a ground/reference voltage. The switch may be toggled so as to selectably connect the capacitor between the AC supply and reference voltage, and thereby alter the power factor of the AC supply.

In some other or further embodiments, the reactive load may comprise an inductor, a variable inductor or a variable capacitor.

In one embodiment, the shunt capacitor is supplementary to a mains buffering or smoothing capacitor of the luminaire, which may be used by conventional luminaires. Alternatively, a portion of the mains buffering or smoothing capacitor may be employed for power factor compensation.

The luminaire 2 comprises a luminaire controller 24 which is adapted to control the coupling of the reactive component 22 to the AC supply 5. In particular, the luminaire controller 24 may receive signals from the controller 4 and control an operation of the reactive load 22 based on the received signal.

The luminaire controller 24 and the controller 4 may communicate using a wired or wireless communication channel. Suitable wireless communication protocols that may be used include an infrared link, ZigBee, Bluetooth, a wireless local area network protocol such as in accordance with the IEEE 802.11 standards, a 2G, 3G or 4G telecommunication protocol, and so on. Suitable wired communication protocols include Ethernet technologies, e.g. in accordance with the IEEE 802.3 standards, or possibly DALI methodologies. Other formats will be readily apparent to the person skilled in the art.

In other embodiments, the reactive component 22 of the first reactive type may be adapted to receive signals directly from the controller 4, such that the controller 4 directly controls the operation of the reactive component 22 of the first reactive type.

In this way, it will be apparent that the controller 4 controls the coupling of the reactive component 22 of the first reactive type of each luminaire, for example, directly or through a luminaire controller 24.

By controlling how the reactive component 22 couples to the AC supply, a power factor of the AC supply may be adjusted. For example, the controller 4 may respond to changes in the appliance with a reactive load of the second reactive type (external to the luminaires) by coupling or decoupling the reactive component 22 of the luminaire 2 to the AC supply 5.

Thus, the lighting network 5 may improve a power factor of the AC supply caused by an appliance or other load external to the lighting network 5. In particular, a central or single controller may control the operation of each luminaire. This enables new control strategies to be implemented (e.g. coupling only a subset of luminaires) and reduces a burden of a luminaire controller, thereby increasing an efficiency of the system.

Each luminaire 2 of the lighting network 1 thereby comprises a switchable reactive component 22 (such as a capacitor), which can be connected to the AC supply 5 (in parallel to other components of the luminaire 2) by the luminaire controller 24 whenever reactive power compensation of the AC supply 5 is required.

The luminaire 2 also comprises a lighting driver 25, adapted to drive the lighting arrangement 21 using at least the AC supply. In some example, the lighting driver 25 comprises an AC to DC converter. Thus, the AC supply 5 may power the lighting arrangement 21 of the luminaire.

The luminaire 2 may also comprise an energy storage system 26, 27. The energy storage system comprises a battery 26 and a battery control circuit 27. The battery 26 may be charged by the battery control circuit 27 (via the lighting driver 25) when a power of the AC supply 5 available to the light emitting arrangement 21 is greater than a power required to drive the light emitting arrangement 21. The battery may be discharged by the battery control circuit 27, so as to drive the light emitting arrangement 21, when a power of the AC supply available to the light emitting arrangement 21 is less than a power required to drive the light emitting arrangement. This may, for example, be due to an interruption to the AC supply or due to the coupling of the reactive load 22 to the AC supply (e.g. when compensating for an improper power factor of the AC supply 5).

The luminaire 2 may comprise an input terminal 28 adapted to receive an AC supply. This may, for example, comprise of a single node or a pair of differential nodes. The reactive load 22 may be controllably connectable to the input terminal (or between differential nodes of the input terminal). This enables the luminaire to contribute to controlling the power factor of the AC supply.

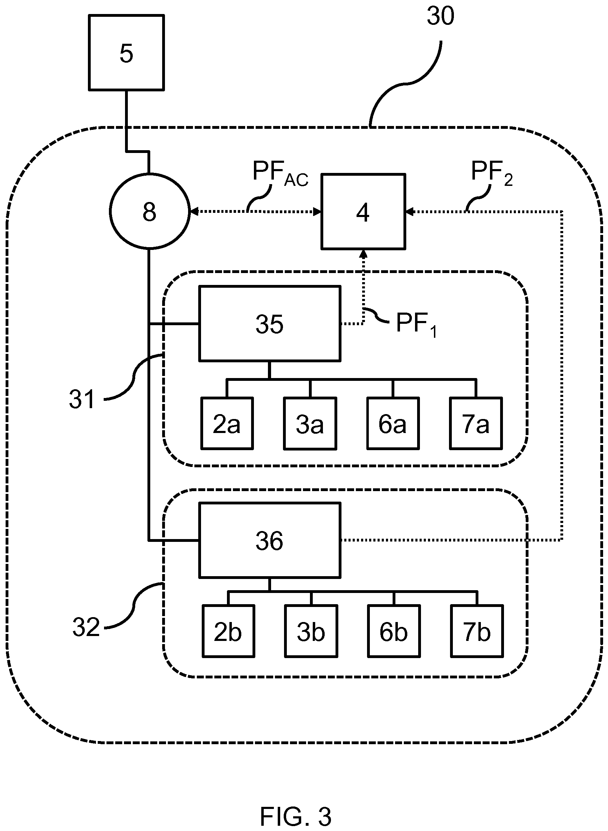

Figure 3 illustrates a lighting network according to a second embodiment, in the context of a more complex electrical network 30. Again, the electrical network may represent an electrical network of a building or other infrastructure.

The electrical network 30 receives an AC supply 5 (e.g. mains supply). A power factor of the AC supply 5 may be monitored by a (main) meter 8, which generates a power factor signal $PF_{AC}$.

The AC supply 5 is distributed between a plurality of distribution branches 31, 32 or sub-networks of the electrical network 30. Each distribution branch represents a different fork or branch from the AC supply 5, and may be associated with a different group or set of loads. The electrical network 30 comprises a first distribution branch 31 and a second distribution branch 32. Each distribution branch may be considered to have its own individual AC supply.

A distribution branch 31, 32 contains components/loads which connect to the AC supply via a same node of the electrical network.

In preferable embodiments, the meter 8 acts as or is integrated in a distribution panel of the electrical network 30. The distribution panel is adapted to distribute the AC supply between the plurality of distribution branches. In other embodiments, there may be a separate, dedicated distribution panel. Optionally, the distribution panel 8 may isolate each distribution branch from one another.

Each distribution branch 31, 32 may be associated with a respective power factor detector or sub-meter 35, 36. The sub-meter may be adapted to measure a power factor signal $PF_1$, $PF_2$ of the AC supply in that branch. Thus, a sub-meter 35, 36 may act as a dedicated power factor detector for a particular distribution branch.

The first distribution branch 31 comprises a first sub-meter 35 and the second distribution branch 32 comprises a second sub-meter 36. The first sub-meter detects a power factor of the AC supply in the first distribution branch 31 so as to generate a first power factor signal $PF_1$, and the second sub-meter detects a power factor of the AC supply in the second distribution branch 32 so as to generate a second power factor signal $PF_2$.

The meter 8 and each sub-meter 31, 32 may each pass a separate power factor signal $PF_{AC}$, $PF_1$, $PF_2$ to the controller 4 using any wired or wireless communication channel. Thus, the controller 4 may obtain one or more power factor signals $PF_{AC}$, $PF_{14}$, $PF_2$ respectively representative of an AC supply of the electrical network, an AC supply at a first distribution branch, an AC supply at the second distribution branch and so on. It will be apparent that each power factor signal obtained in this manner will be representative of a power factor of the AC supply in either a respective distribution branch or the overall network 30.

Each sub-meter may also act as or be integrated in a distribution panel for loads of that distribution branch (i.e. a sub-distribution panel), and may optionally isolate loads of the distribution branch from one another.

The first distribution branch 31 comprises a plurality of luminaires 2a, 3a, and one or more appliances 6a, 7a. As previously described, each luminaire comprises a light emitting arrangement and a reactive component of a first reactive type. The reactive load of each appliance may be different from one another. The combined reactive load of all appliances may form the reactive load of the second reactive type.

The second distribution branch 32 similarly comprises a plurality of luminaires 2b, 3b and one or more appliances 6b, 7b. Thus, each distribution branch contains a mix of luminaires 2a, 3a, and appliances 6a, 7a.

The lighting network thus comprises two or more sets 31, 32 of luminaires.

The controller 4 controls the coupling of the reactive components of the luminaires 2a, 3a, 2b, 3b to the AC supply to thereby control the power factor of the AC supply. This in particular allows for control of an AC supply in a particular distribution branch. The controller 4 may perform this controlling in a number of different modes.

In an operational mode in which each sub-network independently performs its own power factor adjustment, the controller 4 controls the reactive components of the luminaires 2a, 3a of the first distribution branch based on at least a first power factor signal $PF_1$ received from the first sub-meter 35. Similarly, the controller 4 may control the reactive components of the luminaires 2b, 3b of the second distribution branch 32 based on at least a second power factor signal $PF_2$ received from the second sub-meter 36.

To perform a correction or other alteration of the power factor of the AC supply, the controller 4 controls a coupling of a plurality of reactive components of a first reactive type (positioned in a plurality of luminaires) to the AC supply.

A magnitude of this controlled alteration of the power factor may be varied by coupling different numbers of reactive components of the first reactive type to the AC supply; causing different numbers of the luminaires to participate in power factor compensation; adjusting a pattern of luminaires participating in power factor compensation and so on. Where luminaires comprise reactive components of the first reactive type having a variable impedance (e.g. variable capacitors or variable inductors), the controller 4 may control an impedance of individual reactive components of the first reactive type so as to increase a precision of power factor adjustment.

Thus, the controller 4 reads a power factor from sub-meters 35, 36, each associated with a respective set 31, 32, of luminaires and/or other appliance with a reactive load, to thereby identify sub-networks or distribution branches having an AC supply with an affected power factor. The controller 4 will control the luminaires of the affected sub-network or branch to participate in power factor compensation. Thus, the controller 4 may cause reactive components of a first reactive type of luminaires 2a, 3a in a particular distribution branch 31 to correct or compensate for a power factor deviance caused by the appliances 6a, 7a with a reactive load of a second reactive type in that same distribution branch. Thus, each set 31, 32, of luminaires is controlled based on a power factor of an AC supply provided to that set of luminaires.

Controlling the reactive components of the luminaires 2a, 3a based on a power factor signal $PF_1$ associated with the distribution branch 31 of that luminaire 2a, 3a, ensures that power factor compensation is performed in a same sub-network 31 as the loads 6a, 7a affecting the power factor. This improves a quality and efficiency of power factor correction.

In this way, the controller 4 controls the coupling of the first reactive components of the luminaires in the first distribution branch based on the power factor of the AC supply in the first distribution branch. The luminaires of the first distribution branch may thereby compensate for the change in power factor caused by the appliance(s) with a reactive load of the second reactive type in the first distribution branch.

The lighting network may therefore be connectable to a first distribution branch 31 of the AC supply, wherein the one or more appliances are in the same first distribution branch, and the lighting network further comprises a power factor detector adapted to detect the power factor of the AC supply in the first distribution branch, and the controller is adapted to receive the power factor signal from the power factor detector.

In an operational mode in which each sub-network contributes to power factor adjustment of the whole network, the controller 4 controls the reactive components of the luminaires 2a, 3a, 2b, 3b of the first 31 and second 32 distribution branches based on a power factor signal $PF_{AC}$ of the entire electrical network. Thus, there may be a system-wide compensation for the power factor of the electrical network 30. This may be of particular use when a large amount of compensation is required to correct a power factor of the AC network (e.g. when luminaires of a particular distribution branch are unable to correct the AC supply in that distribution branch), as the full breadth of the luminaires correction capabilities may be exploited.

Thus, power factor correction need not only be at a group or distribution branch level. Rather, it can be at an entire electrical network level. For example, a main meter 8 may read the power factor of the electrical network 30 and the controller 4 may instruct groups of luminaires (in respective distribution branches) to participate in reactive power compensation. In this case, instead of measuring the effective power factor at group or sub-network level, it is measured at building or whole network level.

In a 'multi-network' operational mode, the controller 4 controls the reactive components of the luminaires 2a, 3a of the first network based on a first power factor signal $PF_1$, associated with the first distribution branch, and a second power factor signal $PF_2$, associated with the second distribution branch.

Thus, the controller may control the reactive components of one or more luminaires in a particular branch based on the power factor of an AC supply in that particular branch and other branches of the electrical network 30. Thus, each sub-network may contribute to adjusting a power factor of the AC supply based on its own sub-network and other sub-networks.

Preferably, the controller controls sets of luminaires based on a proximity between sets of luminaires. For example, if a lighting system has five sets of luminaires, and a power factor associated with the third set is deviant, the controller may control the luminaires in the second, third and fourth sets. This may reduce an effective length of current harmonics flow in a wire.

A multi-network operational mode may be particular advantageous if a deviance of a power factor of an AC supply is attributed to a second distribution branch 32, but the second distribution branch alone is unable to correct this deviance. In this way, the luminaires in the first distribution branch 31 may assist in correction of the power factor of the AC supply.

The skilled person will appreciate that the controller 4 may operate according to any number of different modes, which combines various aspects of the approaches previously described. In particular, the reactive components of the luminaires may be controlled according to a power factor signal $PF_{AC}$ associated with the whole network and power factor signals $PF_{14}$, $PF_2$ associated with different sub-networks.

Thus, any combination of power factor signals (e.g. power factor signal $PF_{AC}$ and the first power factor signal $PF_1$) may be used to control the operation of the reactive components of the luminaires to advantage.

In at least one embodiment, a distribution branch may be associated with a particular floor of a building. Thus, a first distribution branch may contain all the loads connected to the electrical supply on a first floor, and the second distribution branch may contain all the loads connected to an electrical supply on the second floor and so on.

Of course, there may be further distribution branches (e.g. a third distribution branch, a fourth distribution branch and so on). In this way, there may be more than two sets of luminaires. In some examples, an AC supply in a distribution branch may be further divided into sub-distribution branches. The luminaires in such sub-distribution branch may be controlled in a similar manner to the distribution branches described above, for example, based on one or more power factor signals indicative of a power factor of an AC supply of: the electrical network, the 'patent' distribution branch and/or of the sub-distribution branch.

Preferably, the controller selects which luminaires are involved in power factor adjustment based on a proximity of the luminaire(s) to an appliance forming a reactive load of the second reactive type.

Consider a scenario in which an electrical network has a single appliance with a reactive load of the second reactive type and a lighting network comprising 100 luminaries. In the event that only 10 luminaries are required to compensate for a power factor deviance caused by the appliance with a reactive load of the second reactive type, the controller may control the operation of the 10 luminaries most proximate to the single reactive load of the second reactive type.

In some embodiments, all luminaires and other loads (including at least the reactive load(s) of a second reactive type) have a communication port for communicating with the controller 4. The controller 4 may be capable of identifying the loads and luminaires by their communication addresses and may obtain the physical or relative location (e.g. in the distribution hierarchy of the AC supply) of all appliances and luminaires. The controller may switch the reactive loads of the luminaires most proximate to the appliance(s).

Thus, in embodiments, all luminaires have a communication address (e.g. MAC ID, IP address, or DALI address) for communication purposes. During installation of the luminaires or lighting network, these addresses may be loaded in the controller (e.g. central energy manager) in the form of table mapping. In this way, the controller may know which group a luminaire belongs to, adjacent groups to the luminaire and a physical location of a luminaire.

For selecting a luminaire, the controller may run an algorithm based on the amount of power factor correction required. If more reactive power needs to be compensated then a greater number of luminaires are selected.

Determining the proximity of luminaires to the appliances may include determining an effective length of wire between the luminaires and the appliances.

A proximity-based control method helps in reducing the high peak current path. In particular, selecting the luminaires (for adjusting the power factor) closest to appliances helps in reducing the effective length of current harmonics flow in wire(s). If the compensation is done by more distant luminaires, then a supply having poor current harmonics is transmitted up to the more distant luminaires, which may affect the power supply provided to other components of the electrical network.

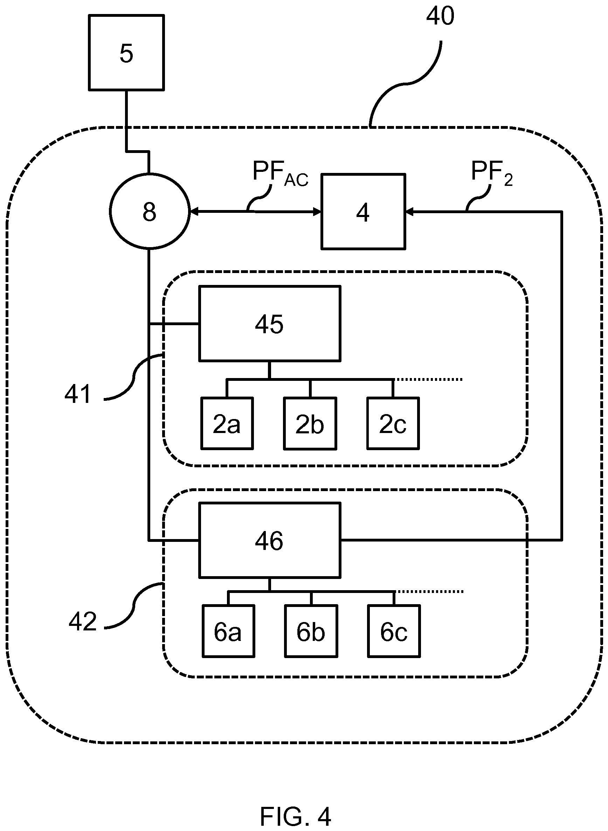

Figure 4 illustrates a lighting network according to a third embodiment, in the context of a different electrical network 40. The electrical network 40 is similar to the electrical network 30 of Figure 3, except that the load connected to the first distribution branch 41 consists of a plurality of luminaires 2a, 2b, 2c; and the load connected to the second distribution branch 42 consists of one or more appliances 6a, 6b, 6c.

Thus, in the electrical network 40, the lighting network is connectable to a first distribution branch of the AC supply 5, where the appliances are connected to a second, different distribution branch of the AC supply 5. Thus, luminaires and appliances are connected in different distribution branches from the AC supply 5.

The controller 4 is adapted to receive a remote power factor signal $PF_2$ from a remote power factor detector associated with the appliance(s) with a reactive load of the second reactive type in the second distribution branch. Here, the remote power factor detector is embodied as the second sub-meter 46 of the second distribution branch.

The controller 4 controls the coupling of the reactive components of the first reactive type (of each of the plurality of luminaires 2a, 2b, 2c) based on the remote power factor signal $PF_2$.

In this way, luminaires positioned in a first distribution branch are used to compensate or correct a power factor deviance caused by one or more appliances with a reactive load in a second, different distribution branch. Thus, a first distribution branch may be adapted to compensate a reduction in the power factor of the AC supply caused by a second distribution branch.

The first sub-meter 45 may, for example, provide feedback to the controller 4 about the power factor of the first distribution branch (e.g. to indicate whether the reactive components of the luminaires are being appropriately controlled). In some embodiments, the controller 4 may also control the coupling of reactive components of the luminaires based on a power factor signal (not shown) from the first sub-meter.

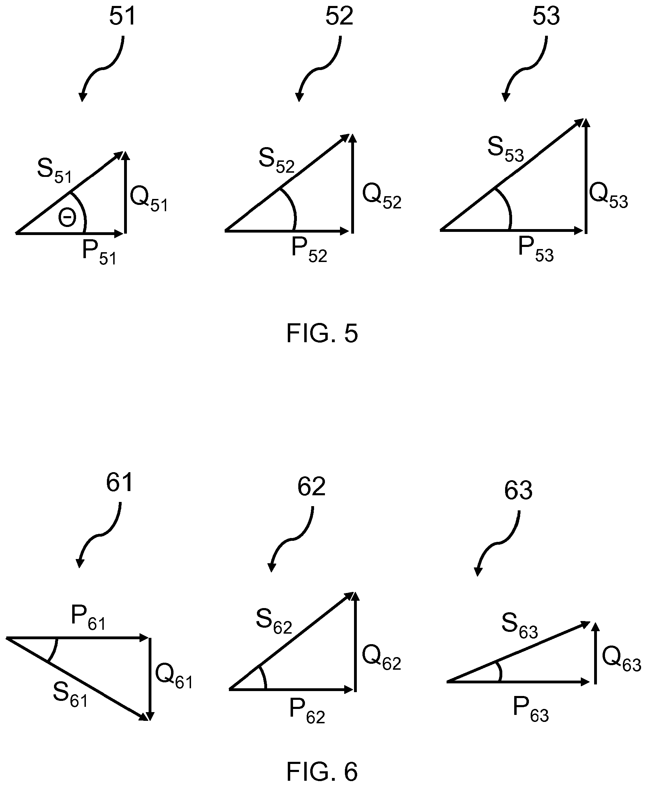

Figure 5 illustrates a power triangle 51 for a lighting load, a power triangle 52 for other loads and a power triangle 53 for a total/combined load of the electrical network 40, before power factor correction is performed.

A power triangle illustrates the relationship between an apparent power S, a reactive power Q and a true/real power P. The reactive power is often considered unusable power for the loads, and is often measured in the unit "var" commonly referred to as the vol-ampere reactive. The relationship between apparent power S, reactive power Q, true power P and power factor PF is well known, in accordance with the following equations:

$$P = S.PF = S.\cos\theta \qquad (1)$$

$$Q = \sqrt{S^2 - P^2} \qquad (2)$$

where $\Theta$ is an angle between the apparent power and the true power within the power triangle, commonly referred to as the phase angle.

A following scenario is described in which the electrical network 40 has a total load of 100kVA.

30% is associated with a lighting load (i.e. the lighting load is 30kVA), consisting of all luminaires in the electrical network, having a lighting load power factor of around 0.9 lag. Thus, the apparent power $S_{51}$ of the lighting load is 30kVA, the reactive power $Q_{51}$ is 13kvar and the true power $P_{51}$ is 27kW.

The lighting load may be equivalent to the lighting network of the electrical network. This may be represented by the first distribution branch 41 of the electrical network according to the third embodiment.

The remaining 70% of the total load is associated with the other loads of the electrical network, the other loads comprising at least one appliance with a reactive load of the second reactive type. The other loads have an apparent power $S_{52}$ of 70kVA and another load power factor ($PF_{52}$) of 0.8 lag. The other appliances may be represented by the second distribution branch 42 of the electrical network. In such a scenario, the true or real power $P_{52}$ associated with these other appliances is calculated based on equation (1) as follows:

$$P_{52} = 70 * 0.8 \qquad (3)$$
$$P_{52} = 56kW$$

The reactive power $Q_{52}$ of the other appliances (comprising the appliance with a reactive load of the second reactive type) is subsequently calculated based on equation (2) as follows:

$$Q_{52} = \sqrt{70^2 - 56^2} \qquad (4)$$
$$Q_{52} = 42kvar$$

The total apparent power $S_{53}$ is 100kVA, the total reactive power $Q_{53}$ is 55kvar and the total true power $P_{53}$ is 83kW. This essentially sums the respective powers of the lighting load $S_{51}$, $Q_{51}$, $P_{51}$ and the other loads $S_{52}$, $Q_{52}$, $P_{52}$. The power factor or lag of the total network is 0.83 (e.g. calculated according to equation (1)).

In the above described scenario, there is scope for minimizing the reactive power of the other appliances by up to 42kvar, in order to improve the power factor or lag of the AC supply of the electrical network. This may be performed by controlling the coupling of the reactive components/loads of the first reactive type (of the plurality of luminaires) appropriately based on a power factor signal indicative of the power factor of the AC supply to the other loads.

For example, in this scenario, the reactive power is a lag caused by appliances with an inductive load (i.e. the reactive loads of the second reactive type are inductors). The reactive components of the first reactive type (contained by respective luminaires) may thereby be capacitors, in order to compensate for the lag induced by the inductors.

The desired total reactive power compensation $Q_{DES}$ (of the AC supply) by the plurality of luminaires is therefore 42kvar (i.e. the reactive power of the other loads). The total reactive power compensation $Q_{TOT}$ provided by the lighting load plurality of luminaires is dependent upon a number (N) of luminaires and an individual reactive power compensation ($Q_{LUM}$) of a single luminaire, which, assuming the luminaires are substantially the same, is as follows:

$$Q_{TOT} = N.Q_{LUM} \qquad (5)$$

The individual reactive power compensation of a single luminaire, which comprises a capacitor having a capacitance $C_{LUM}$ as the reactive load of the first reactive type, may be calculated as follows:

$$Q_{LUM} = V^2.2.\pi.f.C_{LUM} \qquad (6)$$

Where V is the voltage of the AC supply provided to the luminaire, and f is the frequency of the AC supply provided to the luminaire. If the reactive loads of the first reactive type are instead inductors, equation (6) may be appropriately replaced according to well-known principles.

Assuming the AC supply is a typical 230V, 50Hz mains supply, equation (6) may be simplified as follows:

$$Q_{LUM} = 5{,}290{,}000 \,.\, \pi \,.\, C_{LUM} \tag{7}$$

Taking an arbitrary capacitor value of 2.7μF, the individual reactive power compensation $Q_{LUM}$ of a single luminaire is therefore calculable as 45var. Setting the total reactive power compensation $Q_{TOT}$ to the desired total reactive power $Q_{DES}$, and applying equation (5) we can calculate the total number of luminaires required to compensate for the other loads as follows.

$$N = \frac{Q_{DES}}{Q_{LUM}} = \frac{42000}{45} \approx 933 \tag{8}$$

Thus, for a typical mains AC supply, the reactive components of a first reactive type (being a capacitor having a value 2.7μF) of around 933 luminaires needs to be connected to wholly compensate for a power factor or lag of 0.8 of the appliances having reactive loads of the second reactive type. Thus, a controller may controllably couple the reactive loads of 933 luminaires to the AC power supply in order to wholly compensate for the power factor or lag caused by the other loads (including the reactive loads of the second reactive type).

The controller may thereby perform power factor correction by controllably coupling an appropriate number of reactive components of the first reactive type to the AC supply. Thus, the controller controls the number of luminaires involved in power factor correction.

Figure 6 illustrates a power triangle 61 for the lighting load, a power triangle 62 for other loads/appliances and a power triangle 63 for a total/combined load of an electrical network, after power factor correction has been performed as described above.

The true power $P_{61}$ of the lighting load remains the same at 27kW. The reactive power, due to the coupling of the reactive components of the first reactive type to the AC supply, has altered to -29kvar (i.e. a negative value). The difference between the reactive power of the lighting load before power factor correction and after power factor correction is 42kvar (i.e. the reactive power of the other loads of the electrical network prior to power factor correction). The apparent power $S_{61}$ of the lighting load is 39kVA.

The true power $P_{62}$, reactive power $Q_{62}$ and apparent power $S_{62}$ of the other loads remains the same before and after power factor correction.

Whilst the true power $P_{63}$ of the total load after power factor correction has remained at 83kW, the reactive power $Q_{63}$ of the total load has decreased from 55kvar to 13kVar, due to the power correction of the lighting load. Thus, the coupling of the reactive loads of the first reactive type to the AC supply has wholly compensated for the power factor variance caused by the appliances with a load of the second reactive type.

The apparent power $S_{63}$ has also decreased to 84kVA.

Thus, a power efficiency of the electrical system has been significantly improved. A grid stability and power quality of the AC supply has also been improved.

The above scenario has been described purely for the sake of improved understanding. The skilled person will appreciate that the reactive components of the first reactive type may instead or further comprise inductors or capacitors of other values, which will enable appropriate control or adjustment of the power factor of the AC supply.

A lagging power factor (positive reactive power) indicates that a current lags a voltage, and a leading power factor (negative reactive power) indicates that a current leads a voltage (or a voltage lags the current). Inductive loads cause the power factor to lag, and capacitive loads cause the power factor to lead.

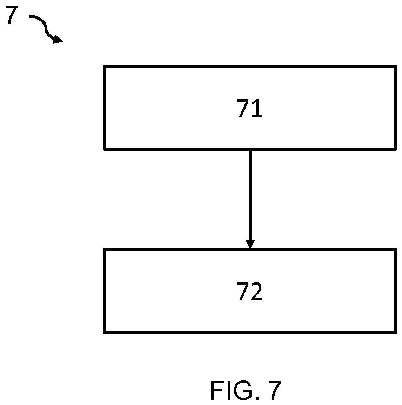

With reference now to Figure 7, there is also proposed a method 7 of controlling a lighting network, having two or more luminaries adapted to connect to an alternating current, AC, supply, wherein each luminaire comprises a light emitting arrangement and a reactive component of a first reactive type selectively couplable to the AC supply, the method comprising: receiving 71 a power factor signal, indicative of a power factor of the AC supply, and responsive to at least one appliance with a reactive load of a second reactive type connected to the AC supply, wherein the appliance is different from the luminaire; and controlling 72 the coupling of the reactive component of each luminaire to the AC supply based on the received power factor signal so as to adjust the power factor of the AC supply.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

As used herein, the terms 'reactive component of a first reactive type' and 'reactive load of a second reactive type' simply indicates that such components/loads have different phase angles or affect a power factor in different ways. By way of example, both reactive loads of the first and second reactive type may comprise a capacitive load, or both reactive loads of the first and second reactive type may comprise an inductive load.

**Claims**

1.  A lighting network (1) comprising:
    a plurality of luminaires (2, 3) adapted to be connected to an alternating current, AC, supply (5), wherein each luminaire comprises a light emitting arrangement (21) and a reactive component (22) of a first reactive type selectively couplable to the AC supply; the lighting network is **characterised in that** it further comprises: a controller (4) adapted to:

    receive a power factor signal ($PF_{AC}$), indicative of a power factor of the AC supply, said power factor signal influenced by an appliance (6) with a reactive load of a second reactive type connected to the AC supply; and control the coupling of the reactive component of each luminaire to the AC supply based on the received power factor signal influenced by the appliance, so as to adjust the power factor of the AC supply.

2.  The lighting network of claim 1, wherein the first reactive type is capacitive, and the second reactive type is inductive, and
    each luminaire further comprises a lighting driver (25) separate from the reactive component (22).

3.  The lighting network of claim 1, the lighting network is adapted to:

    be connectable to a first distribution branch (31) of the AC supply, wherein the appliance (6a, 7a) with a reactive load of a second reactive type is in the same first distribution branch, and the lighting network further comprises a power factor detector (35) adapted to detect the power factor of the AC supply in the first distribution branch, and the controller is adapted to receive the power factor signal ($PF_1$) from the power factor detector; or
    be connectable to a first distribution branch (41) of the AC supply, wherein the appliance (6a, 6b, 6c) with a reactive load of the second reactive type is in a second, different distribution branch (42) of the AC supply, wherein the controller is adapted to receive the power factor signal ($PF_2$) from a remote power factor detector (46) associated with the appliance with a reactive load of the second reactive type in the second distribution branch.

4.  The lighting network of any of claims 1 or 2, wherein:

    the plurality of luminaires (2a, 3a, 2b, 3b) comprises at least two sets (31, 32) of two or more luminaires; and the controller is adapted to:

    obtain a respective power factor signal ($PF_1$, $PF_2$) associated with an AC supply provided to each set of two or more luminaires; and
    control the coupling of the reactive component of each luminaire, in the plurality of luminaires, based on the power factor signal associated with the set of that luminaire.

5.  The lighting network of claim 4, wherein each luminaire in a set of two or more luminaires is connected to a same node, and wherein each set of two or more luminaires is connected to a different node.

**6.** The lighting network of any of claims 4 or 5, wherein at least one set of two or more luminaires (2a, 3a) is associated with a respective set of one or more appliances (6a, 7a) with a reactive load of a second reactive type, and the controller is adapted to control the coupling of the reactive components of the at least one set of two or more luminaires.

**7.** The lighting network of any preceding claim, wherein the controller is adapted to control the coupling of the reactive component of each luminaire further based on a proximity relationship, between the respective luminaire and an appliance with a reactive load of the second reactive type, in a distribution hierarchy of the AC supply.

**8.** An electrical network (10) comprising:

the lighting network (1) of any preceding claim; and
at least one the appliance.

**9.** The electrical network of claim 8, wherein each at least one appliance comprises an inductive appliance, and optionally wherein each inductive appliance comprises: a Heating, Ventilation and Air Conditioning, HVAC, unit; an elevator; a fan; a printer; a scanner; or a fax machine; and the reactive load of the second reactive type comprises inductive coils or a motor.

**10.** The electrical network of any of claims 8 or 9, wherein the lighting network (1) is adapted to either:

be connected to a first distribution branch (31) of the AC supply, wherein the at least one appliance (6a, 7a) with a reactive load of a second reactive type is connected to the same first distribution branch, wherein the lighting network further comprises a power factor detector (35) adapted to detect the power factor of the AC supply at an input node of the lighting network, and the controller is adapted to receive the power factor signal $(PF_1)$ from the power factor detector; or
be connected to a first distribution branch (41) of the AC supply, wherein the at least one appliance (6a, 6b, 6c) with a reactive load of the second reactive type is in a second, different distribution branch (42) of the AC supply, wherein the electrical network further comprises a remote power factor detector (46) adapted to detect the power factor of the AC supply in the second distribution branch and the controller is adapted to receive the power factor signal $(PF_2)$ from the remote power factor detector.

**11.** The electrical network of any of claims 8 to 10, wherein the controller is adapted to select a subset of the plurality of luminaires based on a proximity relationship, between the subset and the at least one appliance with a reactive load of the second reactive type, in the AC distribution hierarchy.

**12.** A method (7) of controlling a lighting network (1), having two or more luminaires (2, 3) adapted to connect to an alternating current, AC, supply (5), wherein each luminaire comprises a light emitting arrangement (21) and a reactive component of a first reactive type (22) selectively couplable to the AC supply, the method being **characterised in that** it comprises the following steps:

receiving (71) a power factor signal $(PF_{AC})$, indicative of a power factor of the AC supply, and influenced by an appliance (6) with a reactive load of a second reactive type (6, 7) connected to the AC supply; and
controlling (72) the coupling of the reactive component of each luminaire to the AC supply based on the received power factor signal so as to adjust the power factor of the AC supply.

**13.** The method of claim 11, further comprising detecting the power factor of the AC supply at a node of the lighting network, wherein the first reactive type is capacitive, and the second reactive type is inductive, and wherein each luminaire further comprises a lighting driver (25) separate from the reactive component (22).

**14.** The method of claim 11, wherein the plurality of luminaires comprises at least two sets (31, 32) of two or more luminaires, and the method comprises:

obtaining a respective power factor signal $(PF_1, PF_2)$ associated with an AC supply provided to each set of two or more luminaires;
controlling the coupling of the reactive component of each luminaire, in the plurality of luminaires, based on the power factor signal associated with the set of that luminaire.

**15.** A computer program product comprising computer program code means adapted to implement the method of any one of claims 12 and 14 when said program is run on a computer.

**Patentansprüche**

1. Beleuchtungsnetzwerk (1), umfassend:
   eine Vielzahl von Leuchten (2, 3), die dazu ausgelegt ist, an eine Wechselstromversorgung (5), AC-Versorgung, angeschlossen zu werden, wobei jede Leuchte eine lichtemittierende Anordnung (21) und eine Blindleistungskomponente (22) eines ersten Blindleistungstyps umfasst, die selektiv mit der AC-Versorgung gekoppelt werden kann; wobei das Beleuchtungsnetzwerk **dadurch gekennzeichnet ist, dass** es weiter umfasst:
   eine Steuerung (4), die ausgelegt ist zum:

   Empfangen eines Leistungsfaktorsignals ($PF_{AC}$), das einen Leistungsfaktor der AC-Versorgung angibt, wobei das Leistungsfaktorsignal von einem Gerät (6) mit einer Blindlast eines zweiten Blindleistungstyps beeinflusst wird, der mit der AC-Versorgung verbunden ist; und
   Steuern der Kopplung der Blindleistungskomponente jeder Leuchte mit der AC-Versorgung basierend auf dem vom Gerät beeinflussten empfangenen Leistungsfaktorsignal, um den Leistungsfaktor der AC-Versorgung einzustellen.

2. Beleuchtungsnetzwerk nach Anspruch 1, wobei der erste Blindleistungstyp kapazitiv ist und der zweite Blindleistungstyp induktiv ist und
   jede Leuchte weiter einen Beleuchtungstreiber (25) umfasst, der von der Blindleistungskomponente (22) getrennt ist.

3. Beleuchtungsnetzwerk nach Anspruch 1, wobei das Beleuchtungsnetzwerk ausgelegt ist, um:

   mit einem ersten Verteilungszweig (31) der AC-Versorgung verbindbar zu sein, wobei sich die Vorrichtung (6a, 7a) mit einer Blindlast eines zweiten Blindleistungstyps in dem gleichen ersten Verteilungszweig befindet und das Beleuchtungsnetzwerk weiter einen Leistungsfaktordetektor (35) umfasst, der ausgelegt ist, um den Leistungsfaktor der AC-Versorgung in dem ersten Verteilungszweig zu erfassen, und die Steuerung ist ausgelegt, um das Leistungsfaktorsignal ($PF_1$) vom Leistungsfaktordetektor zu empfangen; oder
   mit einem ersten Verteilungszweig (41) der AC-Versorgung verbindbar zu sein, wobei sich das Gerät (6a, 6b, 6c) mit einer Blindlast des zweiten Blindleistungstyps in einem zweiten anderen Verteilungszweig (42) der AC-Versorgung befindet; wobei die Steuerung dazu ausgelegt ist, das Leistungsfaktorsignal ($PF_2$) von einem entfernten Leistungsfaktordetektor (46) zu empfangen, der dem Gerät mit einer Blindlast des zweiten Blindleistungstyps in dem zweiten Verteilungszweig zugeordnet ist.

4. Beleuchtungsnetzwerk nach einem der Ansprüche 1 oder 2, wobei:

   die Vielzahl von Leuchten (2a, 3a, 2b, 3b) mindestens zwei Sätze (31, 32) von zwei oder mehr Leuchten umfasst; und
   die Steuerung ausgelegt ist zum:

   Erhalten eines jeweiligen Leistungsfaktorsignals ($PF_1$, $PF_2$), das einer AC-Versorgung zugeordnet ist, die jedem Satz von zwei oder mehr Leuchten bereitgestellt wird; und
   Steuern der Kopplung der Blindleistungskomponente jeder Leuchte in der Vielzahl von Leuchten basierend auf dem Leistungsfaktorsignal, das dem Satz dieser Leuchte zugeordnet ist.

5. Beleuchtungsnetzwerk nach Anspruch 4, wobei jede Leuchte in einem Satz von zwei oder mehr Leuchten mit demselben Knoten verbunden ist und wobei jeder Satz von zwei oder mehr Leuchten mit einem anderen Knoten verbunden ist.

6. Beleuchtungsnetzwerk nach einem der Ansprüche 4 oder 5, wobei mindestens ein Satz von zwei oder mehr Leuchten (2a, 3a) einem jeweiligen Satz von einem oder mehreren Geräten (6a, 7a) mit einer Blindlast eines zweiten Blindleistungstyps zugeordnet ist, und die Steuerung ausgelegt ist, um die Kopplung der Blindleistungskomponenten des mindestens einen Satzes aus zwei oder mehr Leuchten zu steuern.

7. Beleuchtungsnetzwerk nach einem der vorstehenden Ansprüche, wobei die Steuerung dazu ausgelegt ist, die Kopplung der Blindleistungskomponente jeder Leuchte weiter basierend auf einer Näherungsbeziehung zwischen der jeweiligen Leuchte und einem Gerät mit einer Blindlast des zweiten Blindleistungstyps in einer Verteilungshierarchie der AC-Versorgung zu steuern.

8. Elektrisches Netzwerk (10), umfassend:

    das Beleuchtungsnetzwerk (1) nach einem der vorstehenden Ansprüche; und
    mindestens eines der Geräte.

9. Elektrisches Netzwerk nach Anspruch 8, wobei jedes mindestens eine Gerät ein induktives Gerät umfasst, und gegebenenfalls wobei jedes induktive Gerät umfasst: eine Heizungs-, Lüftungs- und Klimaanlageneinheit, HVAC-Einheit; ein Hebewerk; einen Lüfter; einen Drucker; einen Scanner; oder ein Faxgerät; und die Blindlast des zweiten Blindleistungstyps Induktionsspulen oder einen Motor umfasst.

10. Elektrisches Netzwerk nach einem der Ansprüche 8 oder 9, wobei das Beleuchtungsnetzwerk (1) ausgelegt ist zum:

    entweder Verbinden mit einem ersten Verteilungszweig (31) der AC-Versorgung, wobei das mindestens eine Gerät (6a, 7a) mit einer Blindlast eines zweiten Blindleistungstyps mit dem gleichen ersten Verteilungszweig verbunden ist, wobei das Beleuchtungsnetzwerk weiter einen Leistungsfaktordetektor (35) umfasst, der ausgelegt ist, um den Leistungsfaktor der AC-Versorgung an einem Eingangsknoten des Beleuchtungsnetzwerks zu erfassen, und die Steuerung ausgelegt ist, um das Leistungsfaktorsignal ($PF_1$) vom Leistungsfaktordetektor zu empfangen; oder
    mit einem ersten Verteilungszweig (41) der AC-Versorgung verbunden zu werden, wobei sich das mindestens eine Gerät (6a, 6b, 6c) mit einer Blindlast des zweiten Blindleistungstyps in einem zweiten anderen Verteilungszweig (42) der AC-Versorgung befindet, wobei das elektrische Netzwerk weiter einen entfernten Leistungsfaktordetektor (46) umfasst, der ausgelegt ist, um den Leistungsfaktor der AC-Versorgung in dem zweiten Verteilungszweig zu erfassen und die Steuerung ist ausgelegt, um das Leistungsfaktorsignal ($PF_2$) von dem entfernten Leistungsfaktordetektor zu empfangen.

11. Elektrisches Netzwerk nach einem der Ansprüche 8 bis 10, wobei die Steuerung ausgelegt ist, um einen Teilsatz der Vielzahl von Leuchten basierend auf einer Näherungsbeziehung zwischen dem Teilsatz und dem mindestens einen Gerät mit einer Blindlast des zweiten Blindleistungstyps in der AC-Verteilungshierarchie auszuwählen.

12. Verfahren (7) zum Steuern eines Beleuchtungsnetzwerks (1), das zwei oder mehr Leuchten (2, 3) aufweist, die ausgelegt sind, um mit einer Wechselstromversorgung (5), AC-Versorgung, verbunden zu werden, wobei jede Leuchte eine lichtemittierende Anordnung (21) und eine Blindleistungskomponente eines ersten Blindleistungstyps (22) umfasst, die selektiv mit der AC-Versorgung gekoppelt werden kann, wobei das Verfahren **dadurch gekennzeichnet ist, dass** es die folgenden Schritte umfasst:

    Empfangen (71) eines Leistungsfaktorsignals ($PF_{AC}$), das einen Leistungsfaktor der AC-Versorgung angibt, wobei das Leistungsfaktorsignal von einem Gerät (6) mit einer Blindlast eines zweiten Blindleistungstyps (6, 7) beeinflusst wird, der mit der AC-Versorgung verbunden ist; und
    Steuern (72) der Kopplung der Blindleistungskomponente jeder Leuchte mit der AC-Versorgung basierend auf dem empfangenen Leistungsfaktorsignal, um den Leistungsfaktor der AC-Versorgung einzustellen.

13. Verfahren nach Anspruch 11, weiter umfassend das Erfassen des Leistungsfaktors der AC-Versorgung an einem Knoten des Beleuchtungsnetzwerks, wobei der erste Blindleistungstyp kapazitiv ist und der zweite Blindleistungstyp induktiv ist, und
    wobei jede Leuchte weiter einen Beleuchtungstreiber (25) umfasst, der von der Blindleistungskomponente (22) getrennt ist.

14. Verfahren nach Anspruch 11, wobei die Vielzahl von Leuchten mindestens zwei Sätze (31, 32) von zwei oder mehr Leuchten umfasst und das Verfahren umfasst:

    Erhalten eines jeweiligen Leistungsfaktorsignals ($PF_1$, $PF_2$), das einer AC-Versorgung zugeordnet ist, die jedem Satz von zwei oder mehr Leuchten bereitgestellt wird;
    Steuern der Kopplung der Blindleistungskomponente jeder Leuchte in der Vielzahl von Leuchten basierend auf dem Leistungsfaktorsignal, das dem Satz dieser Leuchte zugeordnet ist.

**15.** Computerprogrammprodukt, umfassend Computerprogrammcodemittel, die ausgelegt sind, um das Verfahren nach einem der Ansprüche 12 und 14 zu implementieren, wenn das Programm auf einem Computer ausgeführt wird.

**Revendications**

**1.** Réseau d'éclairage (1) comprenant :
une pluralité de luminaires (2, 3) adaptés pour être raccordés à une alimentation (5) en courant alternatif, CA, dans lequel chaque luminaire comprend un agencement émettant de la lumière (21) et un composant réactif (22) d'un premier type réactif pouvant se coupler sélectivement à l'alimentation CA ; le réseau d'éclairage est **caractérisé en ce qu'**il comprend en outre :
un dispositif de commande (4) adapté pour :

recevoir un signal de facteur de puissance ($PF_{AC}$), indicatif d'un facteur de puissance de l'alimentation CA, ledit signal de facteur de puissance influencé par un appareil (6) avec une charge réactive d'un second type réactif raccordé à l'alimentation CA; et
commander le couplage du composant réactif de chaque luminaire à l'alimentation CA sur la base du signal de facteur de puissance reçu influencé par l'appareil, afin d'ajuster le facteur de puissance de l'alimentation CA.

**2.** Réseau d'éclairage selon la revendication 1, dans lequel le premier type réactif est capacitif, et le second type réactif est inductif, et
chaque luminaire comprend en outre un driver d'éclairage (25) séparé du composant réactif (22).

**3.** Réseau d'éclairage selon la revendication 1, le réseau d'éclairage est adapté pour :

pouvoir être raccordé à une première branche de distribution (31) de l'alimentation CA, dans lequel l'appareil (6a, 7a) avec une charge réactive d'un second type réactif est dans la même première branche de distribution, et le réseau d'éclairage comprend en outre un détecteur de facteur de puissance (35) adapté pour détecter le facteur de puissance de l'alimentation CA dans la première branche de distribution, et le dispositif de commande est adapté pour recevoir le signal de facteur de puissance ($PF_1$) à partir du détecteur de facteur de puissance ; ou
pouvoir être raccordé à une première branche de distribution (41) de l'alimentation CA, dans lequel l'appareil (6a, 6b, 6c) avec une charge réactive du second type réactif est dans une seconde branche de distribution (42) différente de l'alimentation CA, dans lequel le dispositif de commande est adapté pour recevoir le signal de facteur de puissance ($PF_2$) à partir d'un détecteur de facteur de puissance (46) à distance associé à l'appareil avec une charge réactive du second type réactif dans la seconde branche de distribution.

**4.** Réseau d'éclairage selon l'une quelconque des revendications 1 ou 2, dans lequel :

la pluralité de luminaires (2a, 3a, 2b, 3b) comprend au moins deux ensembles (31, 32) de deux luminaires ou plus ; et
le dispositif de commande est adapté pour :

obtenir un signal de facteur de puissance ($PF_1$, $PF_2$) respectif associé à une alimentation CA fournie à chaque ensemble de deux luminaires ou plus ; et
commander le couplage du composant réactif de chaque luminaire, dans la pluralité des luminaires, sur la base du signal de facteur de puissance associé à l'ensemble de ce luminaire.

**5.** Réseau d'éclairage selon la revendication 4, dans lequel chaque luminaire dans un ensemble de deux luminaires ou plus est raccordé à un même nœud, et dans lequel chaque ensemble de deux luminaires ou plus est raccordé à un nœud différent.

**6.** Réseau d'éclairage selon l'une quelconque des revendications 4 ou 5, dans lequel au moins un ensemble de deux luminaires (2a, 3a) ou plus est associé à un ensemble respectif d'un ou plusieurs appareils (6a, 7a) avec une charge réactive d'un second type réactif, et le dispositif de commande est adapté pour commander le couplage des composants réactifs de l'au moins un ensemble de deux luminaires ou plus.

**7.** Réseau d'éclairage selon une quelconque revendication précédente, dans lequel le dispositif de commande est adapté pour commander le couplage du composant réactif de chaque luminaire sur la base en outre d'une relation de proximité, entre le luminaire concerné et un appareil avec une charge réactive du second type réactif, dans une hiérarchie de distribution de l'alimentation CA.

8. Réseau électrique (10) comprenant :

le réseau d'éclairage (1) selon une quelconque revendication précédente ; et
au moins un l'appareil.

9. Réseau électrique selon la revendication 8, dans lequel chaque au moins un appareil comprend un appareil inductif, et facultativement dans lequel chaque appareil inductif comprend : une unité de chauffage, de ventilation et de climatisation, UCVC ; un ascenseur ; un ventilateur ; une imprimante ; un scanner ; ou un télécopieur ; et la charge réactive du second type réactif comprend des bobines inductives ou un moteur.

10. Réseau électrique selon l'une quelconque des revendications 8 ou 9, dans lequel le réseau d'éclairage (1) est adapté pour soit :

être raccordé à une première branche de distribution (31) de l'alimentation CA, dans lequel l'au moins un appareil (6a, 7a) avec une charge réactive d'un second type réactif est raccordé à la même première branche de distribution, dans lequel le réseau d'éclairage comprend en outre un détecteur de facteur de puissance (35) adapté pour détecter le facteur de puissance de l'alimentation CA au niveau d'un nœud d'entrée du réseau d'éclairage, et le dispositif de commande est adapté pour recevoir le signal de facteur de puissance ($PF_1$) à partir du détecteur de facteur de puissance ; ou
être raccordé à une première branche de distribution (41) de l'alimentation CA, dans lequel l'au moins un appareil (6a 6b, 6c) avec une charge réactive du second type réactif est dans une seconde branche de distribution (42) différente de l'alimentation CA, dans lequel le réseau électrique comprend en outre un détecteur de facteur de puissance (46) à distance adapté pour détecter le facteur de puissance de l'alimentation CA dans la seconde branche de distribution et le dispositif de commande est adapté pour recevoir le signal de facteur de puissance ($PF_2$) à partir du détecteur de facteur de puissance à distance.

11. Réseau électrique selon l'une quelconque des revendications 8 à 10, dans lequel le dispositif de commande est adapté pour sélectionner un sous-ensemble de la pluralité de luminaires sur la base d'une relation de proximité, entre le sous-ensemble et l'au moins un appareil avec une charge réactive du second type réactif, dans la hiérarchie de distribution CA.

12. Procédé (7) de commande d'un réseau d'éclairage (1) présentant deux luminaires (2, 3) ou plus adapté pour se raccorder à une alimentation (5) en courant alternatif, CA, dans lequel chaque luminaire comprend un agencement émettant de la lumière (21) et un composant réactif d'un premier type réactif (22) pouvant se coupler sélectivement à l'alimentation CA ; le procédé étant **caractérisé en ce qu'**il comprend les étapes suivantes :

recevoir (71) un signal de facteur de puissance ($PF_{AC}$), indicatif d'un facteur de puissance de l'alimentation CA, et influencé par un appareil (6) avec une charge réactive d'un second type réactif (6, 7) raccordé à l'alimentation CA ; et
commander (72) le couplage du composant réactif de chaque luminaire à l'alimentation CA sur la base du signal de facteur de puissance reçu, afin d'ajuster le facteur de puissance de l'alimentation CA.

13. Procédé selon la revendication 11, comprenant en outre la détection du facteur de puissance de l'alimentation CA au niveau d'un nœud du réseau d'éclairage, dans lequel le premier type réactif est capacitif, et le second type réactif est inductif, et
dans lequel chaque luminaire comprend en outre un driver d'éclairage (25) séparé du composant réactif (22).

14. Procédé selon la revendication 11, dans lequel la pluralité de luminaires comprend au moins deux ensembles (31, 32) de deux luminaires ou plus, et le procédé comprend les étapes consistant à :

obtenir un signal de facteur de puissance ($PF_1$, $PF_2$) respectif associé à une alimentation CA fournie à chaque ensemble de deux luminaires ou plus ; et
commander le couplage du composant réactif de chaque luminaire, dans la pluralité des luminaires, sur la base du signal de facteur de puissance associé à l'ensemble de ce luminaire.

15. Produit de programme informatique comprenant un moyen de code de programme informatique adapté pour mettre en œuvre le procédé selon l'une quelconque des revendications 12 et 14 lorsque ledit programme est exécuté sur un ordinateur.

FIG. 1

FIG. 2

FIG. 3

FIG. 4

51

$S_{51}$  $Q_{51}$  $\Theta$  $P_{51}$

52

$S_{52}$  $Q_{52}$  $P_{52}$

53

$S_{53}$  $Q_{53}$  $P_{53}$

FIG. 5

61

$P_{61}$  $Q_{61}$  $S_{61}$

62

$S_{62}$  $Q_{62}$  $P_{62}$

63

$S_{63}$  $Q_{63}$  $P_{63}$

FIG. 6

7

71

72

FIG. 7

**EP 3 632 186 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2411971 A
- US 20150130363 A1
- US 7531922 B1